(19) Europäisches Patentamt
European Patent Office
Office européen des brevets

(11) **EP 3 718 874 B1**

(12) **EUROPEAN PATENT SPECIFICATION**

(45) Date of publication and mention
of the grant of the patent:
**23.03.2022 Bulletin 2022/12**

(21) Application number: **20162643.9**

(22) Date of filing: **12.03.2020**

(51) International Patent Classification (IPC):
**B63H 5/125** (2006.01)     **B63H 1/20** (2006.01)
**B63H 1/26** (2006.01)

(52) Cooperative Patent Classification (CPC):
**B63H 1/20; B63H 1/26;** B63B 2211/06;
B63H 2005/1258

(54) **SCREW PROPELLER OF A POD DRIVE OF A VESSEL AND POD DRIVE COMPRISING SAID SCREW PROPELLER**

SCHRAUBENPROPELLER EINER PROPELLERGONDEL EINES SCHIFFS UND PROPELLERGONDEL MIT BESAGTEM SCHRAUBENPROPELLER

HÉLICE À VIS D'UN ENTRAÎNEMENT DE NACELLE D'UN NAVIRE ET ENTRAÎNEMENT DE NACELLE COMPRENANT LADITE HÉLICE À VIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2019 RU 2019109622**

(43) Date of publication of application:
**07.10.2020 Bulletin 2020/41**

(73) Proprietor: **AETC SAPPHIRE**
**Saint Petersburg 191014 (RU)**

(72) Inventors:
• **GINESIN, Leonid**
**121059 MOSCOW (RU)**
• **GAVRILOV, Sergey**
**197372 SAINT-PETERSBURG (RU)**
• **KNYAZEV, Leonid**
**198516 SAINT PETERSBURG (RU)**

(74) Representative: **Casalonga**
**Casalonga & Partners**
**Bayerstraße 71/73**
**80335 München (DE)**

(56) References cited:
**GB-A- 1 331 267      GB-A- 2 474 817**
**JP-U- S55 149 497    KR-B1- 101 533 681**
**US-A1- 2017 274 971  US-A1- 2018 105 240**

## Description

The present invention relates to the field of shipbuilding and more specifically to the screw propeller of a vessel, particularly an ice-going vessel, providing movement both ahead and astern in icy conditions where the ice is traversable, while also providing steering for the vessel, and to a pod drive comprising said screw propeller.

Such a screw propeller, as defined by the preamble of independent claim 1, comprises:

- a propeller hub, made so that it can be rigidly attached to the conical tailpiece of the propeller shaft;
- screw propeller blades, each of which comprises a blade foil and a blade flange, made in one piece, mounted on the propeller hub, the blade foil passing into the blade flange via a fillet, wherein the weakest portion for the possible destruction of the blade in the cross section of its foil is located immediately adjacent to the transition between the fillet and the profile of the blade foil.

A pod drive comprises a movable part (a chamber consisting of a gondola attached to a streamlined leg) which is located outside the main hull of the vessel, and in which a propulsion engine, usually electric, is mounted on bearings. The engine shaft operates either directly or through a corresponding gear transmission to serve as a drive shaft (also known as a propeller shaft or shaft drive) for the propulsion screw propeller. A screw propeller is attached to the propeller shaft outside the chamber, usually on a conical tailpiece of the shaft, the propeller serving to convert the engine power into a flow of water which causes the vessel to move, and serving to break up large pieces of ice during movement ahead in icy conditions (in a double-acting ship). The aforementioned movable part of the pod drive is mounted on the hull of the vessel, using a swivel bearing which allows the pod drive to swivel about an axis of rotation, the orientation of which is usually close to the vertical, and which is combined with a swivel mechanism providing the necessary torsional force for swivelling the movable part of the pod drive through the required angle about the swivel axis.

One of the best-known examples of installations of the type described is a pod drive produced by the Swiss-Swedish ABB Group under the trade name Azipod. Pod drives of this type are fitted, in particular, to cruise liners (of the Oasis class, for example), icebreakers (such as the Yuri Topchev), double-acting icebreaking ships (such as the gas carrier Christophe de Margerie), and others.

When a vessel fitted with a pod drive is used in icy conditions, the movable part of the pod drive and the screw propeller are subjected to significant ice and hydrodynamic loads, which, in ordinary operating conditions, must not cause failures or breakdowns in the operation of the screw propeller itself or of the pod drive as a whole, while, if the screw propeller is subjected to extreme ice loads, any damage to the screw propeller blade must forestall any failure of the other components of the pod drive.

Patent document US 2017274971 A1 discloses a screw propeller according to the preamble of claim 1.

There is a known sea-going vessel designed for operation in icy waters, comprising a pod drive (azimuth thruster) with a screw propeller and a bush for the screw propeller (patent RF 2584038 C2, 20.05.2016). The bush is made in the form of a cutter and extends beyond the boundaries of the plane of rotation of the propeller in such a way that, if the bush strikes a block of ice, it breaks it before the rest of the screw propeller strikes said block. Thus, in this technical solution, the action of ice loads on the screw propeller is reduced when the screw propeller interacts axially with a block of ice submerged to the level of the casing or to a deeper level.

The main drawback of these solutions is that it is not effective when the screw propeller interacts laterally with the ice and when the blades strike fragments of ice located outside the zone of action of the cutters of the propeller bush.

There is a known screw propeller for an ice-going vessel in patent document US 2017274971 A1 which discloses a screw propeller according to the preamble of claim 1, and represents therefore the closest prior art to the claimed

In EP 2993120 A1 (09.03.2016), a propeller hub and blade flanges removably attached to the hub, on each of which flanges at least one integrally formed blade is placed, at least two integrally formed blades being positioned on at least one of the blade flanges.

Thus the screw propeller has six blades instead of four, each individual blade being made narrower and thinner; that is to say, the maximum force required to damage one blade is reduced, while the requisite strength properties of the propeller as a whole are retained.

Drawbacks of the known screw propellers are the considerable complexity of its design, the difficulty of manufacturing the twin blades, and the increased cost of repair due to the need to replace twin blades having a common flange when only one of them is damaged. Because of these considerations, the aforementioned known screw propeller has not been included in any pod drive designs that have been implemented.

A necessary condition for ensuring the operability of the movable part of a pod drive and screw propeller is that they should be designed with allowance for what is known as the principle of "pyramidal strength", according to which any damage to the blade of a screw propeller must not result in any significant damage to other components of the pod drive or the vessel. In practice, the adoption of this principle means that all components of the design forming part of a power train, starting at the screw propeller and ending at the assembly for attaching the swivelling mechanism to the vessel's hull, must remain operable when a "blade failure load" (BFL), the maximum force causing damage to a blade, acts on the screw propeller. "Damage to a blade of a screw propeller" is taken to mean the unacceptable bending of a blade due to the plastic deformation of the material, or the breaking of the blade into separate pieces (destruction of the blade).

Damage to a blade is usually the result of its interaction with ice, and the corresponding procedure for calculating the blade failure load is governed by the regulatory texts of the Shipping Register and other classification organizations (DNV-GL, IACS).

In the design of a pod drive, the thicknesses, strength and rigidity of the components of a "pyramidal strength" power train must provide the requisite reserves of strength and minimal clearances between rotating and stationary surfaces to ensure that no damage is caused to the pod drive components when blade failure occurs, and that the pod drive operates normally after the replacement of a damaged blade. Increasing the blade failure load in the design of a pod drive will cause an unjustifiable increase in the thicknesses and rigidity of the power components and a corresponding rise in manufacturing costs for production.

The technical problem facing the present invention is that of reducing the design value of the blade failure load while meeting all the requirements of the Shipping Register for screw propeller strength.

The technical result achieved by the invention is that of reducing the weight, and consequently the cost, of the pod drive.

This technical result is achieved by a screw propeller as defined in independent apparatus claim 1 in which the generatrix connecting the extreme outer radii of the outer surface of the blade flange in the meridional cross section of the screw propeller is curved inside towards the axis (50) of the propeller, so that, when a blade failure load (BFL) acts on the screw propeller at said radius of application , the distance between the cross section of the transition of the blade foil into the flange at the intersection between said curved generatrix and a relatively axial line of the propeller blade foil is located at a distance from the propeller axis which is less than a distance of the intersection of a cross section of a transition of the blade foil into the flange at an intersection between the relatively axial line of the propeller blade foil with the generatrix being a straight line , so that the distance in said meridional section between the weakest cross section of the blade foil when said BFL acts on the screw propeller at said radius of application and the propeller axis is smaller than the distance between the weakest cross section of the blade foil of a screw propeller where the outer surface of the blade flange is defined by a generatrix being a straight line.

It is known that the value of the blade failure load depends on the thickness of the cross section of the blade foil at the start of the fillet transition to the flange, and on the distance from said cross section to the propeller axis, as well as on the mechanical properties of the blade material.

The minimal thicknesses of the blade cross sections and the radii of the fillet joint are determined in accordance with the current rules of the Shipping Register, as is the relative radius to which the load on the propeller is applied in the calculation of the value of the blade failure load. The blades of an ice-going screw propeller are usually made from a limited range of special stainless mould steels with specific mechanical properties.

By making the outer surface of the blade flange with a profile in the meridional cross section curved inwards towards the propeller axis to reduce the distance from said blade foil cross section to the propeller axis, the moment arm of the blade failure load is increased relative to the conventional conical profile and the correspondingly shorter moment arm of said load, which, in turn, leads to a reduction of the design value of the blade failure load, while simultaneously meeting all the requirements of the Shipping Register for screw propeller strength. Thus the loads acting on other components of the pod drive in the plastic bending of, and/or damage to, the screw propeller blade are reduced, thereby enabling the weight, and consequently the cost, of the pod drive to be reduced. Specific examples of embodiment of the invention are given in the dependent claims of the invention.

In particular, the cross section of the transition from the blade foil to the flange is located at a smaller distance from the propeller axis than the distance from the point of intersection of the screw propeller shaft to a straight line located in the meridional cross section of the screw propeller and joining the extreme outer radii of the propeller blade flange, thereby providing the aforementioned reduction in the distance from the smallest cross section of the profile to the propeller axis by comparison with a conventional conical profile.

In one embodiment, the propeller blade flange has a hydrodynamic profile, in its meridional cross section, formed by curved lines and/or smoothly connected conical portions, which is curved inwards towards the propeller axis, resulting in the aforementioned reduction in the distance from the transition cross section to the propeller axis.

The screw propeller is usually constructed in a composite way with removable blades, making it comparatively simple to replace an individual blade if it is damaged, while retaining the operability of all the other components of the pod drive. However, provision may also be made for all the screw propeller blades to be made in one piece with the hub, forming an integrally cast screw propeller. The aforementioned change in the shape of the blade flange for reducing the value of the blade failure load is also applicable to the change in the shape of the hub in the case of an integrally cast screw propeller.

The invention also relates to a pod drive of a vessel, comprising a pod drive gondola and the screw propeller described above, with a propeller hub casing and a spacer casing located between the screw propeller and the pod drive gondola.

The invention is explained with the aid of drawings, showing:

> in Fig. 1: a pod drive;
> in Fig. 2: a meridional cross section through the bush of a screw propeller;
> in Fig. 3: a cross section through a composite screw propeller.

Identical structural components in the different figures are denoted by identical references.

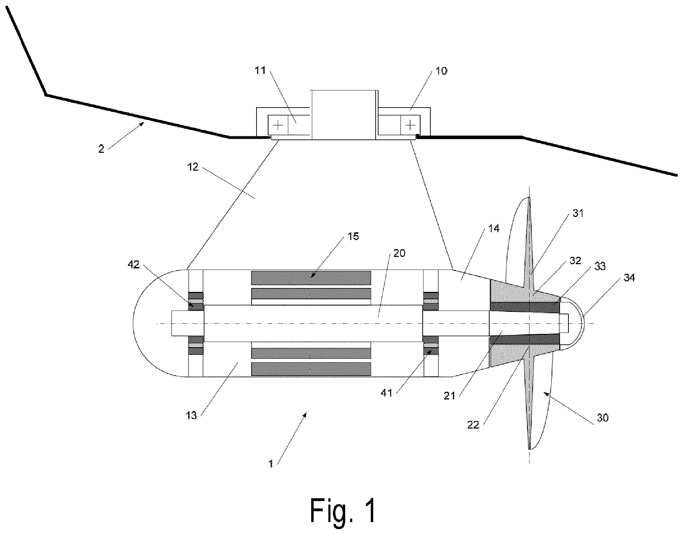

Fig. 1 shows a pod drive 1, attached to the hull 2 of a vessel with the aid of an attachment assembly 10 and a swivel bearing 11, the pod drive taking the form of a chamber consisting of a gondola 13 attached to a leg 12, with an electric propulsion motor 15 and a propeller shaft 20 placed inside. The propeller shaft 20 has a conical tailpiece 21, to which a driving screw propeller 22 is attached outside the gondola.

Two bearings 41, 42 are positioned on the propeller shaft 20, these bearings serving to support the shaft 20 of the electric propulsion motor 15 and to transmit the thrust (traction) from the propeller 22 to the casing of the pod drive.

The screw propeller 22 comprises a propeller hub 33, made so that it can be rigidly attached to the conical tailpiece 21 of the propeller shaft 20; screw propeller blades 30, each consisting of a blade foil 31 and a blade flange 32 made in one piece, mounted on the propeller hub 33; and a casing 34 of the screw propeller bush.

The gondola 13 of the pod drive and the screw propeller 22 are interconnected by a spacer casing 14.

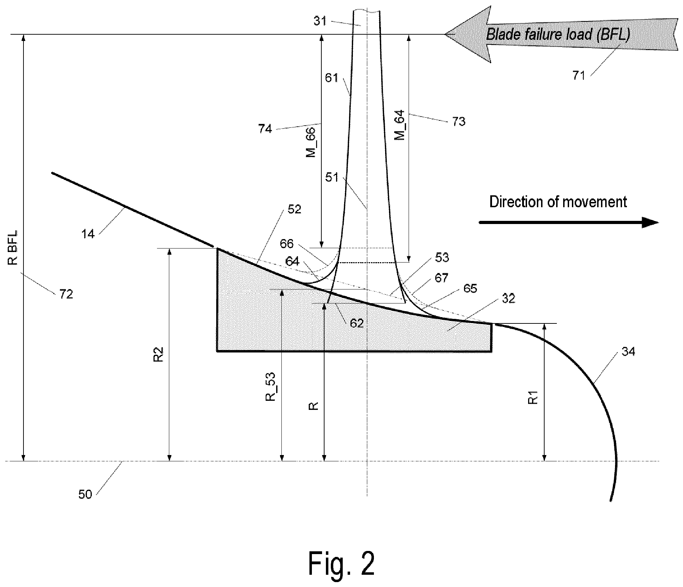

Fig. 2 shows a meridional cross section through the screw propeller hub, together with a diagram of a calculation of the strength of the screw propeller as a function of the action of the blade failure load, or BFL.

The outer surface of the blade flange 32 has, in its meridional cross section, a profile curved inwards towards the axis 50 of the propeller, and denoted by the reference 52.

According to the shipbuilding and classification rules, the BFL 71 is applied at a distance 72 from the propeller axis, also called the radius, corresponding to R_BFL=0.8R in the weakest direction of the blade failure load. The calculation of the bearing capacity of the blade is based on the action of the bending moment of the BFL 71 for the cross section 62 of the transition of the blade foil 31 into the flange 32, which is the weakest section outside the boundaries of the fillet transition of the blade foil 31 to the blade flange 32. This cross section is usually located in the contact area between the fillet 64 and the blade profile 61. The fillet, with another relatively axial line 51 of the screw propeller blade on the side of the blade profile 61, is denoted by the reference 65. The difference between the radius of application of the BFL and the radius of the location of the weakest cross section outside the fillet transition determines the moment arm 73 of the action of the BFL M_64, and, correspondingly, the value of the bending moment in the calculated cross section, which is the product of the BFL 71 and the moment arm 73 of the force M_64.

According to the standards, the blade failure load $F_{ex}$, in kN, is calculated by the formula:

$$F_{ex} = \frac{0.3ct^2\sigma_{ref}}{0.8D-2r} \cdot 10^3,$$

where

$$\sigma_{ref} = 0.6\sigma_{0.2} + 0.4\sigma_u,$$

where $\sigma_u$ and $\sigma_{0.2}$ are the specific maximum values of the ultimate strength and yield point of the blade material;

D, c, t, and r are, respectively, the propeller diameter, and actual length of the chord, thickness and radius of the cylindrical root section of the blade at the weakest point outside the boundaries of the fillet transition, determined by the design of the screw propeller; this section is usually located in the area of attachment of the fillet to the blade profile.

As seen in the strength calculation formula, for a chosen material and a specific shape (geometry) of the blade 30, the value of the blade failure load applied at a radius of 0.8R is mainly determined by the radius of the location of the weakest section outside the boundary of the fillet transition of the blade foil 31 into the blade flange 32, or, in other words, by the moment arm 73 of the action of the BFL.

Fig. 2 also shows that the calculated section 62 of the transition of the blade foil 31 into the flange 32 is located at a distance R from the propeller axis 50 which is less than the distance R_53 from the point of intersection of the propeller axis 50 and a straight line 53 located in the meridional cross section of the screw propeller 22 and connecting the extreme outer radii R1, R2 of the propeller blade flange 32.

By using an inwardly curved hub profile 52, the moment arm 73 of the BFL can be increased relative to the conventional conical generatrix 53 of the hub, and therefore relative to the shorter moment arm 74. The fillets connecting the blade foil 31 to the blade flange 32 of a conical hub are denoted by the references 66 and 67. Consequently, when an inwardly curved hub shape 52 is used, the bending moment causing the destruction of the blade foil 31 reaches its maximum calculated value at a smaller value of the blade failure load 71 than when a rectilinear conical shape 53 is used.

This enables the design value of the blade failure load to be reduced, while meeting all the requirements of the Shipping Register for screw propeller strength, and thereby acting in accordance with the principle of pyramidal strength, by reducing the loads on other components of the pod drive when the screw propeller 30 is subjected to plastic bending (or damage).

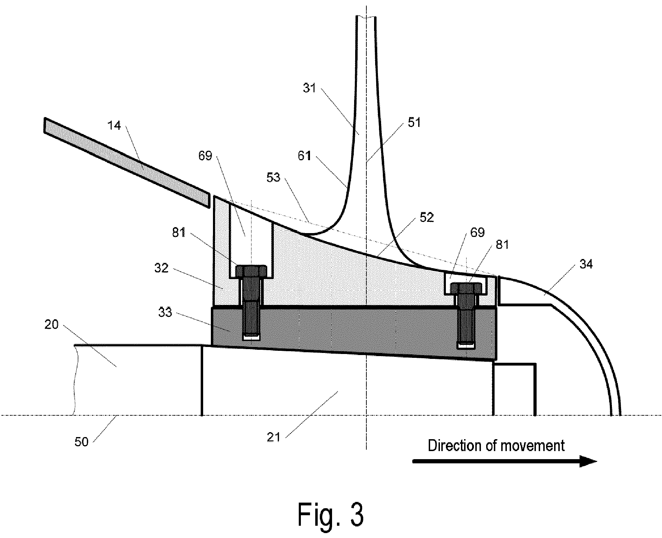

Fig. 3 shows the design of a composite screw propeller of a pod drive, which is commonly used for ice-going vessels. The composite screw propeller usually consists of blades 30, each formed by a blade foil 31 and a blade flange 32. Said blades 30 are joined to the propeller hub 33 by means of bolts 81 fitted in shafts 69 in the blade flange 32, the depth of these shafts being determined by a requirement to avoid the projection of the locking components of the screw propeller blade attachment bolts 81 beyond the flange 32.

The diameter of the propeller shaft 20 and the length of the conical part 21 of the shaft are usually determined by a requirement to transmit the maximum torque from the electric propulsion motor to the propeller of the pod drive. The hub 33 is attached to the portion 21 of the shaft with an interference fit, and the thickness of the hub 33 is determined by a requirement to provide the necessary degree of interference fit and strength in the hub, including the threaded sockets for the blade attachment bolts 81.

The minimum thickness of the blade flange 32 of the screw propeller is determined by a requirement to provide sufficient material under the heads of the bolts 81 for a reliable attachment of the blade 30 to the hub 33, and a minimum depth of the shafts 69 required to achieve the condition of ensuring that the projecting locking parts of the screw propeller blade attachment bolts 81 are sunk into the blade flange 32.

When the aforementioned design constraints are met, the location of the weakest cross section, shown in Fig. 2, outside the fillet transition of the blade foil 31 into the blade flange 32 will be determined by the shape of the generatrix of the flange (bush) of the screw propeller. As seen in Fig. 2, for a given value of the radius of the leading edge of the bush R1, the use of an inwardly curved shape of the generatrix 52 enables said weakest cross section to be located at a smaller radius than in a conventional conical profile 53.

This enables the design value of the blade failure load to be reduced by comparison with the conventional shape of the blade flange of a composite screw propeller, thereby acting in accordance with the principle of pyramidal strength by reducing the loads acting on other components of the pod drive when a blade of the screw propeller 30 is damaged to values which avoid damage to the components of the pod drive during operation in icy conditions.

**Claims**

1. Screw propeller (22) for a pod drive (1) of an ice-going vessel (2), for fitting on a propeller shaft (20), comprising

   - a propeller hub (33), made so that it can be rigidly attached to the conical tailpiece (21) of the propeller shaft (20), and
   - screw propeller blades (30), each of which comprises a blade foil (31) and a blade flange (32), made in one piece, mounted on the propeller hub (33), the blade foil (31) passing into the blade flange (32) via a fillet (64, 65), wherein the weakest portion for the possible destruction of the blade in the cross section of its foil is located immediately adjacent to the transition between the fillet (64, 65) and a profile (61) of the blade foil,

   **characterized in that** the generatrix (52) connecting the extreme outer radii (R1, R2) of the outer surface of the blade flange in the meridional cross section of the screw propeller is curved inside towards the axis (50) of the propeller, so that, when a blade failure load BFL acts on the screw propeller at a radius of application (R_BFL), the distance between the cross section (62) of the transition of the blade foil (31) into the flange (32) at the intersection between said curved generatrix (52) and a relatively axial line (51) of the blade foil (31) and the propeller axis (50) is less than a distance (R_53) of the intersection of a cross section of a transition of the blade foil into the flange at an intersection between the relatively axial line (51) of the blade foil (31) with the generatrix being a straight line (53), so that the distance in said meridional section between the weakest cross section of the blade foil (31) when said BFL acts on the screw propeller at said radius of application (R_BFL) and the propeller axis is smaller than the distance between the weakest cross section of the blade foil (31) of a screw propeller where the outer surface of the blade flange is defined by a generatrix being a straight line (53).

2. Screw propeller (22) according to Claim 1, **characterized in that** the propeller blade flange (32) in its meridional cross section has a hydrodynamic profile formed by smoothly combined conical portions.

3. Screw propeller (22) according to Claim 1 or 2, **characterized in that** it is made in the form of a composite screw propeller with removable blades (30), attached to a hub (33) using a disconnectable joint.

4. Screw propeller (22) according to Claim 1 or 2, **characterized in that** all the blades (30) of the screw propeller are made in one piece with the hub (33), forming an integrally cast screw propeller.

5. Pod drive (1) for a vessel (2), comprising a pod drive gondola, a screw propeller according to any of Claims 1-4, a spacer casing (14) positioned between them, and a propeller casing (34).

**Patentansprüche**

1. Schraubenpropeller (22) für einen Pod-Antrieb (1) eines eisgängigen Schiffes (2) zum Anbringen auf einer Propellerwelle (20), umfassend

   - eine Propellernabe (33), die so ausgestaltet ist, dass sie starr an das konische Endstück (21) der Propellerwelle (20) befestigt werden kann, und
   - Schraubenpropellerflügel (30), die jeweils eine Flügeltragfläche (31) und einen Flügelflansch (32) umfassen, einstückig hergestellt und an der Propellernabe (33) montiert sind, wobei die Flügeltragfläche (31) über eine Kehlung (64, 65) in den Flügelflansch (32) verläuft, wobei der schwächste Abschnitt für die mögliche Zerstörung des Flügels im Querschnitt seiner Tragfläche sich unmittelbar neben dem Übergang zwischen der Kehlung (64, 65) und einem Profil (61) der Flügeltragfläche befindet,

   **dadurch gekennzeichnet, dass** die Mantellinie (52), die die extremen Außenradien (R1, R2) der Außenfläche des Flügelflansches im meridionalen Querschnitt des Schraubenpropellers verbindet, im Inneren zur Achse (50) des Propellers hin gekrümmt ist, so dass, wenn eine Flügelbruchkraft BFL auf den Schraubenpropeller in einem Anwendungsradius (R_BFL) wirkt, der Abstand zwischen dem Querschnitt (62) des Übergangs der Flügeltragfläche (31) in den Flansch (32) am Schnittpunkt zwischen der gekrümmten Mantellinie (52) und einer relativ axialen Linie (51) der Flügeltragfläche (31) und der Propellerachse (50) weniger beträgt als ein Abstand (R_53) des Schnittpunkts eines Querschnitts eines Übergangs der Flügeltragfläche in den Flansch an einem Schnittpunkt zwischen der relativ axialen Linie (51) der Flügeltragfläche (31), wobei die Mantellinie eine gerade Linie (53) ist, so dass der Abstand im meridionalen Schnitt zwischen dem schwächsten Querschnitt der Flügeltragfläche (31), wenn die BFL auf den Schraubenpropeller am Anwendungsradius (R_BFL) wirkt, und die Propellerachse kleiner ist als der Abstand zwischen dem schwächsten Querschnitt der Flügeltragfläche (31) eines Schraubenpropellers, wo die Außenfläche der Flügelflansch von einer Mantellinie definiert ist, die eine gerade Linie (53) ist.

2. Schraubenpropeller (22) nach Anspruch 1, **dadurch**

**gekennzeichnet, dass** der Flügelflansch (32) des Propellers in seinem meridionalen Querschnitt ein hydrodynamisches Profil aufweist, das von gleichmäßig zusammengesetzten konischen Abschnitten gebildet wird.

3. Schraubenpropeller (22) nach Anspruch 1 oder 2, **dadurch gekennzeichnet, dass** er in der Form eines Verbundschraubenpropellers mit entfernbaren Flügeln (30), die mit einer lösbaren Verbindung an einer Nabe (33) befestigt sind, hergestellt ist.

4. Schraubenpropeller (22) nach Anspruch 1 oder 2, **dadurch gekennzeichnet, dass** alle Flügel (30) des Schraubenpropellers einstückig mit der Nabe (33) hergestellt sind und einen einstückig gegossenen Schraubenpropeller bilden.

5. Pod-Antrieb (1) für ein Schiff (2), umfassend eine Gondel mit Pod-Antrieb, einen Schraubenpropeller nach einem der Ansprüche 1-4, ein dazwischen positioniertes Zwischengehäuse (14) und ein Propellergehäuse (34).

**Revendications**

1. Hélice à vis (22) pour un entraînement de nacelle (1) d'un navire naviguant dans la glace (2), destinée à être installée sur un arbre d'hélice (20), comprenant

   - un moyeu d'hélice (33) réalisé de manière à pouvoir être fixé de façon rigide à la pièce d'extrémité arrière (21) conique de l'arbre d'hélice (20), et
   - des pales d'hélice à vis (30) qui comportent chacune une lame de pale (31) et un pied de pale (32) réalisés d'une seule pièce, montés sur le moyeu d'hélice (33), la lame de pale (31) se raccordant au pied de pale (32) par un congé (64, 65), la partie la plus faible pour une destruction possible de la lame, dans la section transversale de sa lame, étant directement adjacente à la transition entre le congé (64, 65) et un profil (61) de la lame de pale,

   **caractérisée en ce que** la génératrice (52) reliant les rayons extérieurs extrêmes (R1, R2) de la surface extérieure du pied de pale, dans la section transversale méridionale de l'hélice à vis, est incurvée à l'intérieur en direction de l'axe (50) de l'hélice, de manière à ce que, lorsqu'une charge de rupture de pale BFL agit sur l'hélice à vis à l'endroit d'un rayon d'application (R_BFL), la distance entre la section transversale (62) de la transition de la lame de pale (31) vers le pied (32), à l'intersection entre ladite génératrice (52) incurvée et une ligne (51) relativement axiale de la lame de pale (31), et l'axe d'hélice (50) est inférieure à une distance (R_53) de l'intersection d'une section transversale d'une transition de la lame de pale vers le pied, à une intersection entre la ligne (51) relativement axiale de la lame de pale (31), la génératrice étant une ligne droite (53), de sorte que la distance dans ladite section méridionale, entre la section transversale la plus faible de la lame de pale (32), lorsque ladite BFL agit sur l'hélice à vis à l'endroit dudit rayon d'application (R_BFL), et l'axe de l'hélice est plus petite que la distance entre la section transversale la plus faible de la lame de pale (31) d'une hélice à vis, où la surface extérieure du pied de pale est définie par une génératrice qui est une ligne droite (53).

2. Hélice à vis (22) selon la revendication 1, **caractérisée en ce que** le pied de pale d'hélice (32), dans sa section transversale méridionale, présente un profil hydrodynamique formé par des portions coniques combinées de façon régulière.

3. Hélice à vis (22) selon la revendication 1 ou 2, **caractérisée en ce qu'**elle est réalisée sous la forme d'une hélice à vis composite, avec des pales (30) amovibles, fixées à un moyeu (33) en utilisant un assemblage démontable.

4. Hélice à vis (22) selon la revendication 1 ou 2, **caractérisée en ce que** toutes les pales (30) de l'hélice à vis sont réalisées d'un seul tenant avec le moyeu (33), formant ainsi une hélice à vis coulée d'une seule pièce.

5. Entraînement de nacelle (1) destiné à un navire (2), comprenant une gondole d'entraînement de nacelle, une hélice à vis selon l'une des revendications 1 à 4, un carter d'espacement (14) placé entre elles, et un carter d'hélice (34).

Fig. 1

Fig. 2

Direction of movement

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017274971 A1
- US RF2584038 C2

- EP 2993120 A1